**Europäisches Patentamt**

**European Patent Office**

**Office européen des brevets**

(19)

(11) Veröffentlichungsnummer : **0 178 410**
**B1**

(12) **EUROPÄISCHE PATENTSCHRIFT**

(45) Veröffentlichungstag der Patentschrift :
11.01.89

(51) Int. Cl.⁴ : **B 23 F 19/10**

(21) Anmeldenummer : 85109857.4

(22) Anmeldetag : 06.08.85

(54) Verfahren zum Abdachen der stirnseitigen Zahnenden von verzahnten Werkstücken und Vorrichtung zum Ausführen des Verfahrens.

(30) Priorität : 20.09.84 DE 3434558

(43) Veröffentlichungstag der Anmeldung :
23.04.86 Patentblatt 86/17

(45) Bekanntmachung des Hinweises auf die Patenterteilung : 11.01.89 Patentblatt 89/02

(84) Benannte Vertragsstaaten :
DE FR GB IT

(56) Entgegenhaltungen :
DE—A— 2 058 146
DE—A— 2 406 325
DE—A— 2 551 967
DE—B— 1 048 762
US—A— 2 865 257

(73) Patentinhaber : **Carl Hurth Maschinen- und Zahnradfabrik GmbH & Co**
**Moosacher Strasse 36**
**D-8000 München 40 (DE)**

(72) Erfinder : **Spensberger, Johann**
**Watzmannstrasse 9**
**D-8011 Poing (DE)**
Erfinder : **Fischer, Heinrich**
**Schildensteinstrasse 12**
**D-8000 München 80 (DE)**
Erfinder : **Müller, Richard**
**Forggenseestrasse 60**
**D-8000 München 90 (DE)**

## Beschreibung

Die Erfindung betrifft ein Verfahren zum Abdachen der stirnseitigen Zahnenden von verzahnten zylinderischen oder kegeligen Werkstücken gemäß dem Oberbegriff des Hauptanspruchs sowie eine Vorrichtung zum Ausführen dieses Verfahrens.

Die Abdachungen zum Erleichtern des axialen Ineinanderschiebens von Synchronverzahnungen, Schieberädern und ähnlicher Getriebeteile wird heute meistens durch Fräsen mit stoßartigem Vorschub (« Stoßfräsen ») auf speziell dafür bestimmten Zahnkantenfräsmaschinen im Teilverfahren hergestellt (Werkstatt und Betrieb, 95. Jahrg. (1962), Heft 3, S. 139 bis 143). Zum Einstellen des Werkzeugs in die richtige Position relativ zum Werkstück sind 5 Hilfs- oder Einstellachsen erforderlich. Für eine zweispindelige Stoßfräsmaschine sind deshalb neben den 3 Arbeitsachsen (eine für das Werkstück und zwei für die beiden Werkzeuge) nicht weniger als 10 Hilfsachsen erforderlich. Diesem Sachverhalt ist in der Vergangenheit, wo die Hilfsachsen von Hand mit einfachen Mitteln verstellt wurden, wenig Beachtung geschenkt worden. Für die Zukunft, wenn auch Hilfsachsen zur Erzielung einer hohen Flexibilität der Fertigungseinrichtungen bei gleichzeitig kürzesten Umrüstzeiten automatisch, d. h. vorprogrammiert, eingestellt werden müssen, kommt diesem Sachverhalt jedoch eine erhebliche Bedeutung zu. Es ist ohne weiteres erkennbar, daß solche Maschinen nur mit einem erheblichen konstruktiven und fertigungstechnischen Aufwand für den Einsatz in einer flexiblen Fertigung umgerüstet werden können.

Vergleichsweise selten werden Abdachungen durch Stoßen mit einem Schneidstahl hergestellt (DE-AS-1 047 578), aber dieses Verfahren hat sich bisher nicht durchsetzen können. Da zum Umrüsten weniger Hilfsachsen notwendig sind, ergibt sich die Möglichkeit für einen Einsatz in einer flexiblen Fertigung. Nachteilig ist aber, daß die zu erzeugende Dachform nur in sehr engen Grenzen variiert werden kann.

Der Erfindung liegt deshalb die Aufgabe zugrunde, ein Verfahren zum Stoßen von Abdachungen und eine dafür geeignete Vorrichtung zu schaffen, die verschiedene Dachformen herzustellen erlaubt, und zwar sowohl bei außen- als auch bei innenverzahnten Teilen.

Die Aufgabe wird gelöst mit einem Verfahren, das die Kennzeichen des Hauptanspruchs aufweist. Dieses Verfahren kann als ein kontinuierliches Verfahren angesehen werden. Die Zuordnung des Werkzeugs bzw. von dessen Bewegung relativ zum sich ständig drehenden Werkstück ermöglicht verschiedene Varianten des Verfahrens, die in den Ansprüchen 2 bis 7 aufgezeigt sind. Besonders vorteilhaft sind dabei die Verfahren nach den Ansprüchen 2, 4 und 5, weil dabei jeweils eine Schneide hinsichtlich der Schnittbedingungen optimal ausgebildet werden kann und die verfahrensbedingten Nebenzeiten kurz sind.

Dies trifft insbesondere in Verbindung mit dem Anspruch 6 zu. Besonders bei größeren Zähnen mit entsprechendem Zerspanungsvolumen bietet auch das Verfahren nach Anspruch 7 Vorteile. Das Verfahren kann in zweckmäßiger Weise auch für das Entgraten oder Anfasen der Zahnstirnkanten angewendet werden (Anspruch 8) mit gegenüber dem Abdachen verringertem Spanabtrag.

Das vorgeschlagene Verfahren ist nicht nur dazu geeignet, Abdachungen mit ebenen Dachflächen zu erzeugen. Es ist durch Modifikation einer die Hubbewegung steuernden Nockenscheibe möglich, auch konvex oder konkav ballige Dachflächen zu erzeugen. Die am häufigsten anzutreffende Form der Schalterleichterung ist die sogenannte « gerade Dachform ». Sie ist gekennzeichnet durch einen Dachwinkel um 90° und durch ebene bis leicht ballige Dachflächen. Daß diese Dachform verbesserungsfähig ist, ergibt sich aus den geometrischen Zusammenhängen. Als optimal kann eine Dachform angesehen werden, deren Dachflächen (Dachformhälften) dem Ausschnitt aus einer mehrgängigen Schraube mit einem Spiralwinkel entsprechend dem Dachformwinkel entsprechen. Wegen der koaxialen Anordnung der ineinanderzuschiebenden Teile bei gleichzeitiger Drehung relativ zueinander bietet die schraubenförmige Ausbildung der Schalterleichterung ein einwandfreies Gleiten der beiden Teile gegeneinander ohne Verlagerung des Berührpunktes bzw. der Berührlinie.

Eine solche Schalterleichterung in Form eines Ausschnittes aus einer Schraube kann mit dem erfindungsgemäßen Verfahren hergestellt werden. Vorteilhaft ist dabei, daß die Bearbeitungsriefen in der Richtung der Schaltbewegung verlaufen und nicht, wie beim Fräsen, quer dazu. Die Schalterleichterung wird zweckmäßigerweise mit einer Rundung am Dachfirst versehen, was ohne zusätzliche Arbeitsgänge mit dem erfindungsgemäßen Verfahren möglich ist.

Mit der Rundung wird einem Absplittern des Firstes beim Auftreffen auf den Gegenzahn vorgebeugt.

Eine Vorrichtung, auf der das Verfahren ausgeführt werden kann, weist die Merkmale des Anspruchs 9 auf und kann — entsprechend den oben erwähnten Verfahrensvarianten — mit den Merkmalen der Ansprüche 10 bis 12 und 18 weiter ausgestaltet werden.

Zum Einstellen des Schwinghebels so, daß die Schneide des Werkzeugs mittig oder im gewünschten Abstand außermittig auf den Werkstückzahn trifft, kann die Vorrichtung nach Anspruch 13 weitergebildet werden. Für das Zusammenwirken von Nockenscheibe und Schwinghebel sind zweckmäßige Anordnungen in den Ansprüchen 14 und 15 angegeben. Die Größe der Bewegung des Schwinghebels und damit die Länge des Werkzeughubes kann mit dem Merkmal des Anspruchs 16 sehr einfach variiert werden. Wenn die Vorrichtung zum Entgraten oder Kantenbrechen eingesetzt werden soll, kann eine Weiterbildung entsprechend Anspruch 17 zweckmäßig sein, um auch den Zahngrund bearbeiten zu können.

Das Zusammenwirken der Werkstückspindel mit der Steuerwelle bzw. des Werkstücks mit dem Werkzeug kann sowohl mechanisch (Anspruch 19) als auch elektrisch (Anspruch 20) erfolgen. Im letzteren Falle kann mit einer Ausgestaltung nach Anspruch 21 eine Modifikation der Dachflächen erzeugt werden.

Die Erfindung wird nachstehend anhand eines Ausführungsbeispiels beschrieben, das in 16 Figuren dargestellt ist. Es zeigen

Figur 1 eine Maschine, auf der die Erfindung anwendbar ist,

Figur 2 einen Ausschnitt aus einer Abwicklung der Werkzeugzähne und die Bewegung des Werkzeugs,

Figur 3 die gleiche Abwicklung mit einer anderen Bewegung des Werkzeugs,

Figur 4 einen abgedachten Werkstückzahn mit gerundetem Dachfirst,

Figur 5 einen stirnseitig abgerundeten Werkstückzahn,

Figuren 6 bis 9 die Zuordnung des Werkzeugs zum Werkstück bei verschiedenen Bearbeitungsvarianten,

Figur 10 ein Werkzeug mit zwei Schneiden,

Figur 11 ein Schema eines Verstellgetriebes für die Steuerwelle,

Figuren 12 und 13 zwei Varianten des Zusammenwirkens von Schwinghebel und Nockenscheibe,

Figur 14 eine schematische Darstellung der Antriebsverbindung mittels einer elektrischen Welle, und

Figur 15 einen möglichen Drehzahlverlauf des Werkstücks.

Figur 16 zeigt eine weitere Variante zu Fig. 6 bis 9.

Im Ständer 2 einer Werkzeugmaschine 1 ist ein zu bearbeitendes Werkstück (Zahnrad) 3 mit bekannten Mitteln 7 drehbar eingespannt. Der Drehantrieb erfolgt vom Hauptantrieb 4 aus über ein Vorgelegegetriebe 5 mit auswechselbaren Wechselrädern auf eine Werkstückspindel 6. Ein Kreuzschlitten 8 ist verschiebbar auf dem Ständer 2 angeordnet. Die dafür erforderlichen Antriebsmittel sind mit 9 bezeichnet. Auf dem Kreuzschlitten 8 ist ein Schwinghebel 10 um eine Achse 11 beweglich gelagert. Der Schwinghebel 10 trägt an seinem freien Ende ein Schneidwerkzeug 12 in Form eines Stoßstahls, einer Wendeschneidplatte od. dgl. Seine Schneide 13 liegt parallel zur Stirnseite des Werkstücks 3 und zu einer Radialen 14, die von der Werkstückachse ausgehend mittig durch den zu bearbeitenden Zahn 15 verläuft. Auf dem Kreuzschlitten 8 ist ferner eine Steuerwelle 16 drehantreibbar gelagert, die, ausgehend vom Hauptantrieb 4, über eine ausziehbare Gelenkwelle 17 und zwei Kegelradstufen 18, 19 angetrieben wird und eine Nockenscheibe 20 trägt. Diese Nockenscheibe drückt gegen den Schwinghebel 10 und bewirkt, daß das Werkzeug 12 eine Hubbewegung zum zu bearbeitenden Zahn 15 hin und wieder zurück ausführt, und zwar auf einer kreisabschnittförmigen Bahn, wobei bei der Hinbewegung eine Spanabnahme erfolgt. Das Werkstück 3 rotiert dabei ständig. Seine Drehbewegung und die Hubbewegung sind so aufeinander abgestimmt, daß das Werkzeug 12 während einer Werkstückumdrehung ebenso viele Hübe ausführt wie das Werkstück Zähne hat. Dadurch werden alle Zähne während einer Umdrehung bearbeitet.

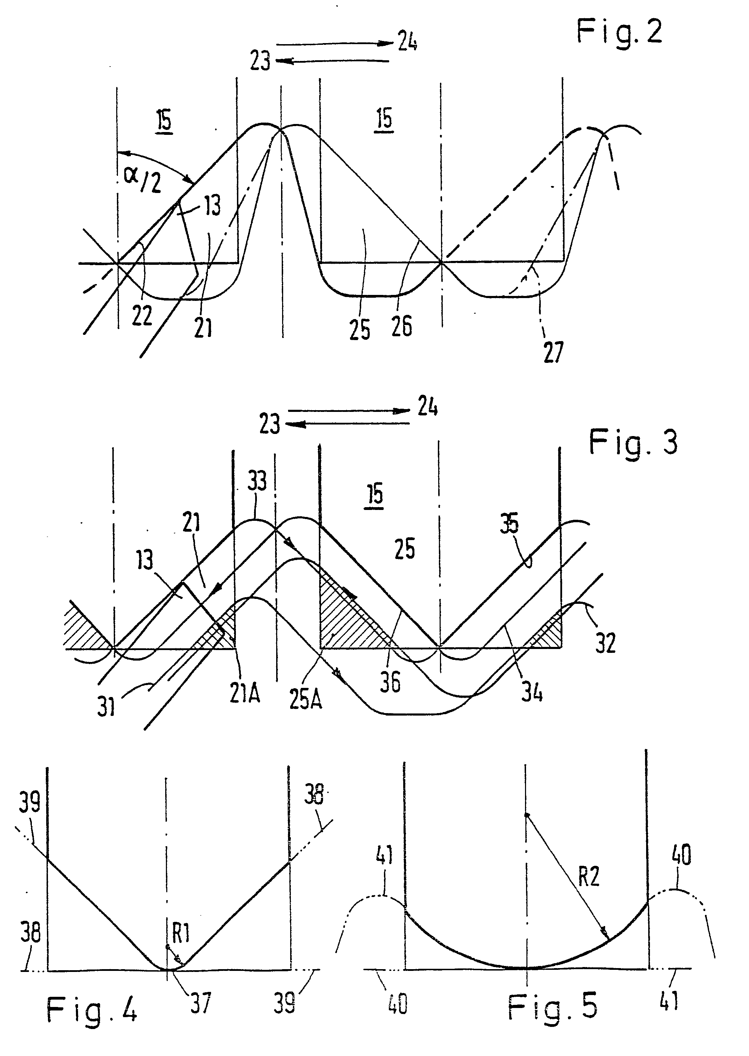

Die Nockenscheibe 20 hat eine Form in der Art, daß die Schneide 13 beim Hinhub in der Zahnmitte auf den zu bearbeitenden Zahn 15 trifft (Fig. 2) und unter dem halben Dachwinkel $\alpha$ die zu entfernende Zahnkante 21 abträgt. Dabei dreht sich das Werkstück in Pfeilrichtung 23. Sobald die Schneide aus dem Zahn 15 austritt, erfolgt der Rückhub, und zwar so, daß die Schneide 13 am benachbarten Zahn 15A vorbei geht. Beim nächsten Hinhub trifft sie dann den Zahn 15A in der Zahnmitte. Die einer Umdrehung der Nockenscheibe 20 entsprechende Bahnkurve des Werkzeugs ist in Figur 2 dick ausgezogen und mit 22 bezeichnet. Wenn alle Zähne bearbeitet sind, wird die Drehrichtung gewechselt (Pfeilrichtung 24) und dasselbe oder ein anderes Werkzeug trägt die anderen Zahnkanten 25 in gleicher Weise ab (Bahnkurve 26). Da die Zahnkanten 21 bereits entfernt sind, kann die Kurve 26 in diesem Bereich 27 auch etwas flacher verlaufen. Die Kanten 21, 25 können auch mit jeweils mehreren Schnitten abgetragen werden. Ein Beispiel dafür zeigt Figur 3. Die Schneide 13 bewegt sich zunächst auf der Kurve 31. Das Werkstück dreht sich dabei in Pfeilrichtung 23. Die Kanten 21 werden teilweise entfernt (schraffierte Flächen 21A). Dann wird die Drehrichtung gewechselt (Pfeilrichtung 24) und die Schneide 13 bewegt sich auf der Kurve 32 ; dabei werden die Kanten 25 teilweise entfernt (schraffierte Fläche 25A). Anschließend wird die Drehrichtung wieder gewechselt, die Schneide bewegt sich jetzt auf der Kurve 33 und stellt die Dachfläche 35 fertig. Schließlich wird die Drehrichtung noch einmal gewechselt, verläuft also wieder in Pfeilrichtung 24, und die jetzt der Kurve 34 folgende Schneide stellt die Dachfläche 36 fertig. Die in den Kurven 31 bis 34 eingezeichneten Pfeilspitzen geben die Relativbewegung der Schneide 13 gegenüber dem Werkstück 3 an. Die Schneide 13 ist in Figur 3 etwas abweichend von Figur 2 dargestellt, um bei beiden Drehrichtungen dieselben Schnittbedingungen zu erhalten. Die « Teilbearbeitung » läßt den größeren Schneidenwinkel zu, für den bei der Komplettbearbeitung nach Figur 2 kein ausreichender Freigang vorhanden ist.

Bei den Beispielen nach den Figuren 2 und 3 wird die Schneide 13 beim Rückhub jeweils von der Verzahnung abgehoben. Sie kann aber auch nur bis zur Stirnfläche des Werkstücks 3 zurückgezogen werden. Dann können mit entsprechend geformten Nockenscheiben die Zähne 15 einen gerundeten Dachfirst 37 erhalten (Figur 4) oder sie werden nicht abgedacht sondern abgerundet (Figur 5). Sowohl die Rundung R1 des Dachfirstes als auch die Rundung R2 der stirnseitig abgerundeten Zähne wird in zwei Arbeitsgängen bei jeweils entgegengesetzter Drehrichtung erzeugt : Bei der Drehung des Werkstücks in Pfeilrichtung 23 folgt die Schneide der Bahn 38 bzw. 40 und bei der entgegengesetzten Drehung der Bahn 39 bzw. 41. Die Bahnen 38 und 39 bzw. 40 und 41 kreuzen sich jeweils in der Zahnmitte.

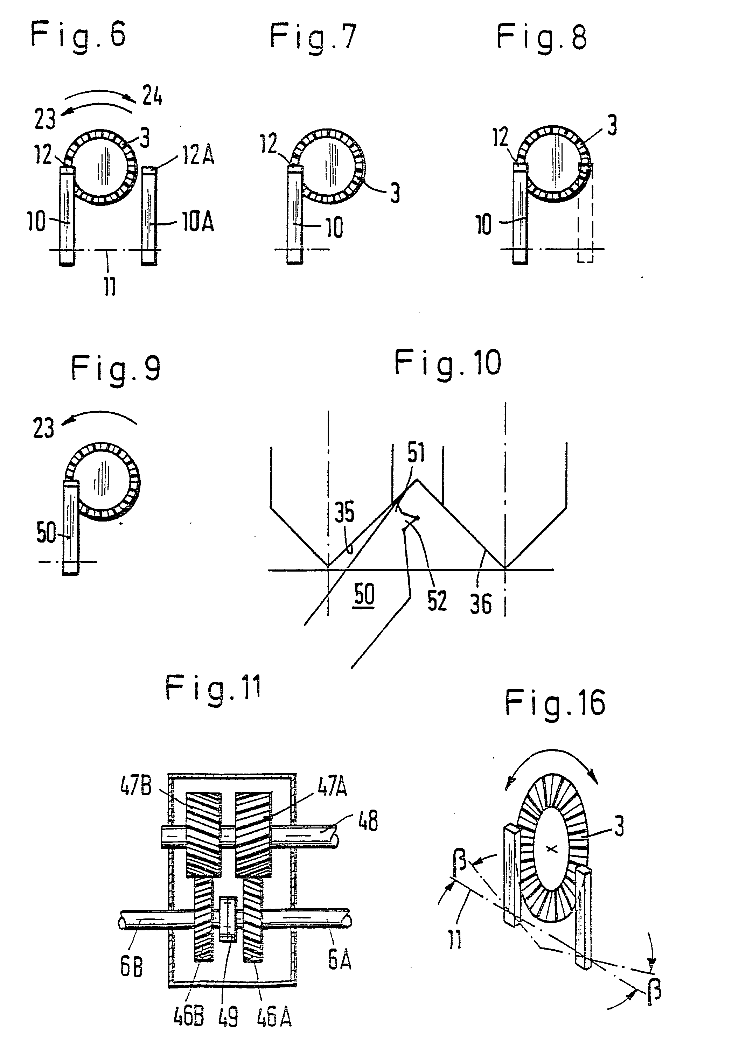

In Zusammenhang mit der Figur 2 wurde erwähnt, die Dachflächen könnten mit einem oder mit zwei Werkzeugen hergestellt werden. Werden zwei Werkzeuge verwendet, d. h. eines für die eine und ein anderes für die andere Drehrichtung, dann sind diese wie in Figur 6 angeordnet. Das eine (12) steht mit seinem Schwinghebel 10 in der Arbeitsstellung, d. h. die Schneide befindet sich vor dem Werkstück 3. Das andere Werkzeug 12A steht mit seinem Schwinghebel 10A versetzt dazu seitlich vom Werkstück 3. Das Werkstück dreht sich in Pfeilrichtung 23 und es können die Dachflächen 35 hergestellt werden. Zum Herstellen der Dachflächen 36 werden die Schwinghebel 10, 10A nach links im Sinne der Figur 6 verschoben, so daß jetzt das Werkzeug 12 mit seinem Schwinghebel 10 seitlich vom Werkstück steht und sich das Werkzeug 12A in Arbeitsstellung befindet.

Wenn nur ein Werkzeug für beide Drehrichtungen verwendet wird, dann kann dieses immer an derselben Stelle verbleiben (Figur 7), d. h. die Arbeitsstellung ist für beide Drehrichtungen dieselbe. Mit Rücksicht auf die Schneidengeometrie ist es aber vorteilhafter, beim Drehrichtungswechsel das Werkzeug 12 mit seinem Schwinghebel 10 auf die andere Werkstückseite zu verfahren (gestrichelte Kontur in Figur 8). Aus der in Figur 2 gezeigten Kontur der Schneide 13 ist ersichtlich, daß die Schnittbedingungen für die beiden Drehrichtungen unterschiedlich sind. Mit dem Verfahren des Werkzeugs auf die andere Werkstückseite wird erreicht, daß für beide Drehrichtungen die gleichen Schnittbedingungen vorliegen. Wenn die Zähnezahl z des Werkstücks ungerade ist, muß beim Verfahren des Werkzeugs gleichzeitig das Werkstück um 1/2 Zahnteilung verdreht werden.

Zum Verfahren der Schwinghebel 10, 10A finden im Werkzeugmaschinenbau bekannte Einrichtungen wie z. B. Spindeln oder Hydraulikzylinder Verwendung. Diese Einrichtungen sind in den Figuren nicht dargestellt.

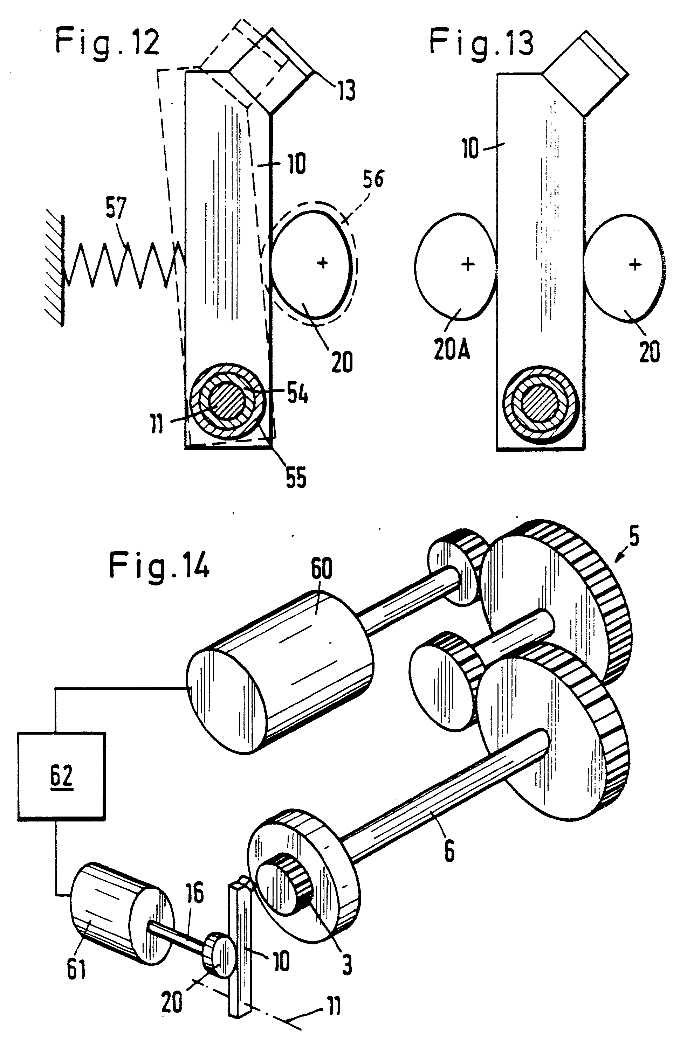

Aus den Figuren 2 und 3 ist auch ersichtlich, daß beim Drehrichtungswechsel eine Lageverschiebung zwischen dem Werkstück 3 und der Schneide 13 notwendig sein kann. Das kann mit verschiedenen Mitteln erreicht werden, z. B. mit einem Verstellgetriebe, das auf die Werkzeugspindel wirkt und mit dem das Werkstück um einen geringen Betrag relativ zur Schneide verdreht werden kann. Ein solches Verstellgetriebe ist in Figur 11 gezeigt. Die Werkstückspindel 6 ist dazu geteilt in zwei Wellen 6A und 6B. Auf den einander zugekehrten Enden dieser Wellen ist je ein schrägverzahntes Ritzels 46A, 46B angeordnet. Ihre Zahnschrägen sind entgegengesetzt, wie in Figur 11 schematisch angedeutet ist, und sie haben gleiche Zähnezahlen. Die beiden Ritzel 46A, 46B kämmen jeweils mit einem Rad 47A, 47B, die beide entsprechend den Ritzeln schrägverzahnt und so breit sind, daß sie längs ihrer Achse verschoben werden können, ohne außer Eingriff zu kommen. Die beiden Räder 47A, 47B sitzen fest auf einer längsverschiebbaren Welle 48. Die Welle 48 und mit ihr die schrägverzahnten Räder 47A, 47B können elektromotorisch oder hydraulisch verschoben werden. Da die Zahnschrägen der Radpaare gegenläufig sind, werden dabei die beiden Ritzel 46A, 46B, gegeneinander verdreht. Je nach dieser Zusatzbewegung kann das Werkstück in der einen oder in der anderen Richtung verdreht werden. Zwischen den schrägverzahnten Ritzeln 46A, 46B kann eine schaltbare Kupplung 49 vorgesehen sein, die vorzugsweise beim Verstellen der Ritzel geöffnet wird, sonst aber geschlossen bleibt. Dadurch wird die Starrheit der ersten Werkstückspindel 6 trotz des Verstellgetriebes gewährleistet.

Die Dachflächen 35, 36 können mit einem Spezialwerkzeug 50 (Fig. 9 und 10) auch bei gleichbleibender Drehrichtung 23 bearbeitet werden. Das Werkzeug 50 ist dazu mit zwei Schneiden bestückt, von denen die eine (51) die Dachfläche 35 und die andere (52) die Dachfläche 36 erzeugt. Ein Verschieben des Werkzeugs ist dabei nicht erforderlich.

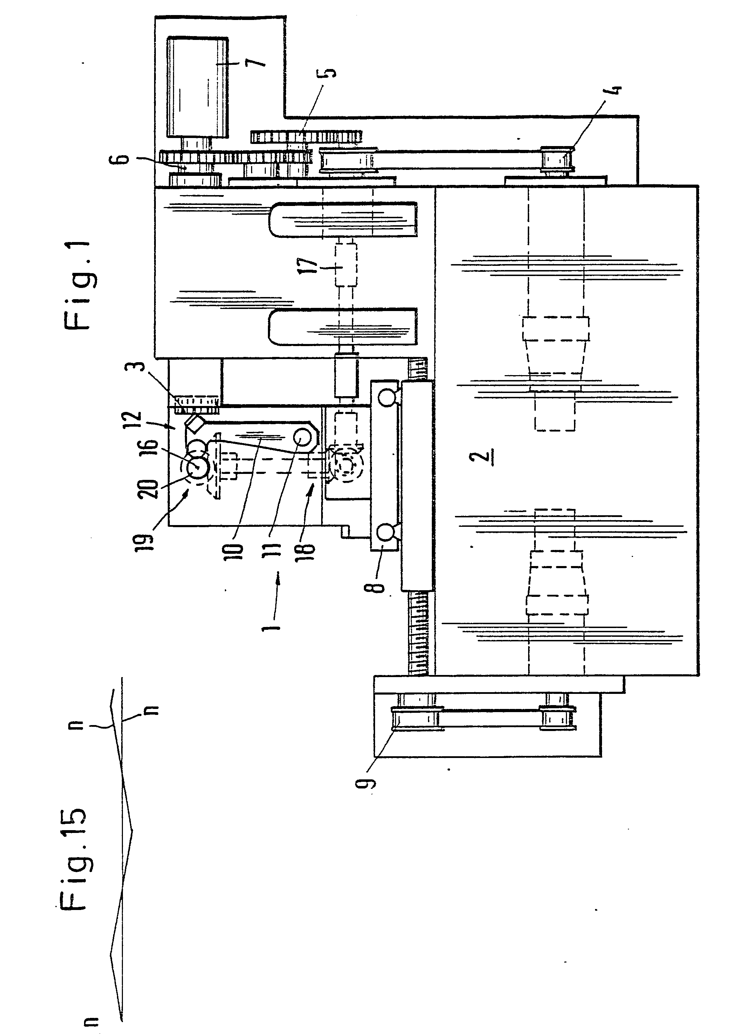

Figur 12 zeigt vereinfacht die Anordnung des Schwinghebels 10 auf seiner Achse 11 und das Zusammenwirken mit der Nockenscheibe 20. Zwei gegeneinander verdrehbare und feststellbare Exzenterringe 54, 55 ermöglichen eine Höheneinstellbarkeit der Schneide 13. Die Nockenscheibe 20 wirkt gegen die Kraft einer Feder 57 auf den Schwinghebel. Im gezeigten Beispiel ist die Nockenscheibe, im Gegensatz zu Figur 1, auf der Seite des Werkstücks angeordnet, womit ein Hineinziehen der Schneide ins Werkstück 3 mit Sicherheit verhindert werden kann. Der Schwinghebel 10 kann, wie in Figur 13 gezeigt, auch zwischen zwei Nockenscheiben 20, 20A zwangsgeführt sein. Wie auch die anderen Figuren, sind die Figuren 12 und 13 nur als Schema zu betrachten, um das Prinzip zu veranschaulichen. Die Nockenscheibe kann auch eine konische Mantelfläche 56 aufweisen. Durch axiales Verstellen, z. B. aus der Zeichenebene von Figur 12 heraus, kann damit die Bewegung des Schwinghebels 10 bzw. der Hub der Schneide 13 verändert werden.

Die mit dem im Vorstehenden beschriebenen Verfahren bzw. mit den entsprechenden Vorrichtungen herstellbaren Dachformen können aufgrund der Anordnung der Schneide 13 zum Werkstück 3 bzw. aufgrund der Relativbewegungen dieser Teile zueinander Dachformhälften oder Dachflächen 35, 36 haben, die Teile einer mehrgängigen Schraube sind. Abweichungen von der geometrisch exakten Schraubenfläche, die durch die Bewegung des Werkzeugs auf einem Kreisbogen hervorgerufen würden, werden durch eine entsprechende Formgebung der Nockenscheibe weitestgehend ausgeglichen.

Die vorstehend beschriebenen Einrichtungen können auch zum Entgraten oder zum Anfasen der stirnseitigen Zahnkanten von verzahnten Werkstücken verwendet werden, wobei nur eine vergleichsweise geringe Spanabnahme erfolgt die etwa der Fläche 21A in Figur 3 entspricht. Wenn auch der Zahngrund entgratet oder angefast werden soll, dann ist ein Schrägstellen der Achse 11 des Schwinghebels 10 um einen Winkel β, wie in Figur 16 angedeutet, zweckmäßig. Dann kann die Schneide 13 nämlich auch in diesem, bei der normalen Hubbewegung nicht erreichten Bereich wirksam sein.

In Figur 14 ist, wiederum schematisch, eine Anordnung mit separaten Antrieben 60, 61 für die Werkstückspindel 6 und die Nockenscheibe 20 gezeigt. Es sind nur die wesentlichen Teile dargestellt. Teile, die vergleichbaren Teilen der Figur 1 entsprechen, sind mit denselben Positionsnummern versehen. Die beiden Antriebsmotoren 60, 61 sind über eine sogenannte elektrische Welle miteinander bzw. mit einer Steuereinrichtung 62 verbunden, die den Synchronlauf der Werkstückspindel 6 und der Steuerwelle 16 in Abhängigkeit von der Zähnezahl z des Werkstücks 3 sicherstellt. Die Steuereinrichtung 62 kann so eingerichtet sein, daß die Drehgeschwindigkeit n des Werkstücks 3 während eines Werkzeughubes verändert, z. B. beschleunigt und verzögert, wird, wie das in Figur 15 angedeutet ist. Damit können Korrekturen in der Dachform vorgenommen werden, d. h. es können konkave oder konvexe Dachformhälften erzeugt werden oder es kann einer Abweichung der Dachformhälften von der geometrischen Schraubenform entgegengewirkt werden.

**Patentansprüche**

1. Verfahren zum Abdachen der stirnseitigen Zahnenden von verzahnten zylinderischen oder kegeligen Werkstücken (3) durch Stoßen, wobei die wirksame Werkzeugkante (Schneide 13) in Abhängigkeit von der Umfangsgeschwindigkeit des stetig um seine Achse rotierenden Werkstücks (3) hin- und herbewegt wird und bei jedem auf die Stirnfläche des Werkstücks gerichteten Hub auf jeweils einen anderen Zahn (15, 15A) spanabhebend einwirkt, dadurch gekennzeichnet, daß die hin- und hergehende Hubbewegung der Werkzeugkante (Schneide 13) auf einem Kreisabschnitt erfolgt, dessen Achse (11) zumindest angenähert parallel zu einer von der Werkstückachse ausgehenden und durch den zu bearbeitenden Zahn (15, 15A) verlaufenden Radialen des Werkstücks (3) verläuft.

2. Verfahren nach Anspruch 1, dadurch gekennzeichnet, daß die linken und rechten Dachformhälften (35, 36) in getrennten Arbeitsgängen und mit separaten Werkzeugen (12, 12A) bei jeweils entgegengesetzter Drehrichtung (23, 24) des Werkstücks (3) bearbeitet werden, wobei sich das jeweils inaktive Werkzeug (12A, 12) außer Eingriff mit der Werkstück-Verzahnung befindet.

3. Verfahren nach Anspruch 1, dadurch gekennzeichnet, daß die linken und rechten Dachformhälften (35, 36) in getrennten Arbeitsgängen mit demselben Werkzeug (12) bei entgegengesetzter Drehrichtung (23, 24) des Werkstücks (3) bearbeitet werden, wobei zwischen den beiden Arbeitsgängen das Werkzeug (12) ggf. relativ zum Werkstück (3) verstellt wird.

4. Verfahren nach Anspruch 1, dadurch gekennzeichnet, daß die linken und rechten Dachformhälften (35, 36) in getrennten Arbeitsgängen mit demselben Werkzeug (12) bei entgegengesetzter Drehrichtung (23, 24) des Werkstücks (3) bearbeitet werden, wobei das Werkzeug (12) beim Drehrichtungswechsel vor den jeweils gegenüberliegenden Zahn (15) des Werkstücks (3) verfahren und das Werkstück (3) bei ungerader Zähnezahl um 1/2 Teilung verdreht wird.

5. Verfahren nach Anspruch 1, dadurch gekennzeichnet, daß die linken und rechten Dachformhälften (35, 36) abwechselnd in einem Arbeitsgang bei gleichbleibender Drehrichtung (23) mit demselben Werkzeug (50) bearbeitet werden, wobei das Werkzeug (50) abwechselnd mit einer ersten Schneide (51) die einen (35) und mit einer zweiten Schneide (52) die anderen Dachformhälften (36) bearbeitet.

6. Verfahren nach einem der Ansprüche 1 bis 5, dadurch gekennzeichnet, daß die linken und die rechten Dachformhälften (35, 36) während jeweils einer Werkstück-Umdrehung erzeugt werden.

7. Verfahren nach Anspruch 3, dadurch gekennzeichnet, daß jede Dachformhälfte (35, 36) in mehreren Schritten bearbeitet wird, wobei abwechselnd alle linken und alle rechten Dachformhälften (35, 36) bearbeitet werden mit jeweiligem Drehrichtungswechsel (23, 24) und ggf. Verstellung des Werkzeugs (12) relativ zum Werkstück (3).

8. Verfahren nach einem der Ansprüche 1 bis 7, gekennzeichnet durch seine Anwendung beim Entgraten oder Anfasen der Stirnkanten von Zahnrädern (3).

9. Vorrichtung zum Abdachen und Anfasen bzw. Entgraten der stirnseitigen Zahnenden von verzahnten zylinderischen oder kegeligen Werkstücken (3) nach dem Verfahren nach Anspruch 1 oder 8, gekennzeichnet durch folgenden Aufbau:

a) das Werkstück (3) ist an einer im Maschinengestell gelagerten Werkstückspindel (6) drehantreibbar und auswechselbar aufgenommen;

b) ein eine Werkzeugkante (Schneide 13) aufweisendes Werkzeug (12, 50) ist am freien Ende eines Schwinghebels (10) angebracht, der mittels mindestens einer auf einer drehantreibbaren Steuerwelle (16) sitzenden Nockenscheibe (20) (Steuerkurve) zum zu bearbeitenden Werkstück-Zahn (15) hin gerichtete Schwingbewegungen ausführt und dabei um eine Achse (11) schwingt, die am anderen Ende des Schwinghebels (10) parallel zu einer von der Werkstückachse ausgehenden und durch den zu bearbeitenden Werkstück-Zahn (15) verlaufenden Radialen des Werkstücks (3) verläuft;

c) der Drehantrieb (60) der Werkstückspindel (6) und der Drehantrieb (61) der Steuerwelle (16) sind so aufeinander abgestimmt, daß das Werkzeug (12) während einer Werkstück-Umdrehung z Hübe zum Werkstück (3) hin und wieder zurück ausführt und dabei pro Hub eine Zahnhälfte abdacht oder anfast bzw. entgratet, wobei z die Zähnezahl des Werkstücks (3) ist.

10. Vorrichtung nach Anspruch 9, dadurch gekennzeichnet, daß ein zweiter ein Werkzeug (12A) aufweisender Schwinghebel (10A) vorhanden ist und daß von den beiden Schwinghebeln (10, 10A) in Abhängigkeit von der Drehrichtung (23, 24) der Werkstückspindel (6) jeweils einer von einer Nockenscheibe (20) bewegt wird, während der andere außer Eingriff mit der Werkstück-Verzahnung stillgesetzt ist.

11. Vorrichtung nach Anspruch 9, gekennzeichnet durch ein Verstellgetriebe (46A, 46B, 47A, 47B, 48, 49) im Antrieb der Nockenscheibe (20), mit dem die Stellung des Schwinghebels (10) bzw. des Werkzeugs (12) durch Verdrehen der Nockenscheibe (20) relativ zum Werkstück (3) verstellbar ist.

12. Vorrichtung nach Anspruch 9, dadurch gekennzeichnet, daß der Schwinghebel (10) vor der Werkstück-Stirnseite von einer Seite auf die andere verschiebbar und dafür antreibbar ist.

13. Vorrichtung nach Anspruch 9, dadurch gekennzeichnet, daß der Schwinghebel (10) auf seiner Achse (11) mittels eines einstellbaren Exzenters (54, 55) gelagert ist.

14. Vorrichtung nach einem der Ansprüche 9 bis 13, dadurch gekennzeichnet, daß der Schwinghebel (10) mittels Federkraft (57) gegen die Nockenscheibe (20) gedrückt wird, die auf der dem Werkstück (3) zugewendeten Seite des Schwinghebels (10) angeordnet ist.

15. Vorrichtung nach einem der Ansprüche 9 bis 13, dadurch gekennzeichnet, daß der Schwinghebel (10) zwischen zwei synchron umlaufenden Nockenscheiben (20, 20A) geführt ist.

16. Vorrichtung nach einem der Ansprüche 9 bis 15, dadurch gekennzeichnet, daß die Nockenscheibe (20) eine kegelige Mantelfläche (56) besitzt und längsverschiebbar ist bzw. daß die Nockenscheiben (20, 20A) kegelige Mantelflächen (56) besitzen und längsverschiebbar sind.

17. Vorrichtung nach Anspruch 9, dadurch gekennzeichnet, daß die Schwingachse (11) gegenüber der Werkstückachse winkeleinstellbar ist (Winkel B) in einer Ebene, die parallel ist zu einer von der Werkstückachse und der besagten Radialen bestimmten Ebene.

18. Vorrichtung nach Anspruch 9, dadurch gekennzeichnet, daß das Werkzeug (12) eine zweite, gegenüber der ersten (51) versetzte Werkzeugkante (Schneide 52) besitzt, wobei die eine mit der linken und die andere mit der rechten Dachformhälfte (35, 36) zusammenwirkt.

19. Vorrichtung nach Anspruch 9, dadurch gekennzeichnet, daß für den Drehantrieb der Werkstückspindel (6) und den der Nockenscheibe (20) ein gemeinsamer Motor (Hauptantrieb 4) vorgesehen ist, wobei zwischen dem Motor (4) und der Werstückspindel (6) und/oder zwischen dem Motor (4) und der Nockenscheibe (20) mindestens eine in ihrer Übersetzung veränderbare Getriebestufe (5) vorgesehen ist.

20. Vorrichtung nach Anspruch 9, dadurch gekennzeichnet, daß für den Drehantrieb der Werkstückspindel (6) und für den der Nockenscheibe (20) je ein eigener Motor (60, 61) vorhanden ist, die über eine elektrische Welle miteinander und mit einer Steuereinrichtung (62) verbunden sind.

21. Vorrichtung nach Anspruch 20, dadurch gekennzeichnet, daß die Nockenscheibe (20) eine gleichförmige Drehbewegung ausführt und die Drehbrewegung der Werkstückspindel (6) während jedes Hubes des Werkzeugs (12) beschleunigt und verzögert wird.

**Claims**

1. A method of chamfering the tooth end faces of toothed cylindrical or tapered workpieces (3) by impact, wherein the effective tool edge (cutting edge 13), is moved back and forth in dependence on the peripheral speed of the workpiece (3) which constantly rotates about its axis, and at each stroke directed towards the end face of the workpiece acts on a respective tooth (15, 15A) to effect cutting, characterised in that the stroke movement of the tool edge (cutting edge 13) back and forth takes place on an arc of a circle, the axis (11) whereof extends at least approximately parallel to a radius of the workpiece (3) extending from the axis of the workpiece and through the tooth (15, 15A) to be machined.

2. A method according to Claim 1, characterised in that the left and right hand chamfers (35, 36) are machined respectively in separate operations and with respective separate tools (12, 12A) in an opposite direction of rotation (23, 24) of the workpiece (3), and the idle tool (12A, 12) in each case is disengaged from the workpiece toothing.

3. A method according to Claim 1, characterised in that the left and right hand chamfers (35, 36) are machined in separate operations with the same tool (12) in an opposite direction of rotation (23, 24) of the workpiece (3), and the tool (12) may be adjusted relative to the workpiece (3) between the two operations.

4. A method according to Claim 1, characterised in that the left and right hand chamfers (35, 36) are machined in separate operations with the same tool (12) with an opposite direction of rotation (23, 24) of the workpiece (3), and when the direction of rotation is changed the tool (12) is moved in front of the respective opposed tooth (15) of the workpiece (3) in each case and the workpiece (3) is turned by 1/2 a pitch when the number of teeth is uneven.

5. A method according to Claim 1, characterised in that the left and right hand chamfers (35, 36) are machined alternately in one operation with a constant direction of rotation (23) with the same tool (50), and the tool (50) machines alternately the one chamfer (35) with a first cutting edge (51) and the other chamfer (36) with a second cutting edge (52).

6. A method according to one of Claims 1 to 5, characterised in that the left and the right hand chamfers (35, 36) are produced in each case during one workpiece revolution.

7. A method according to Claim 3, characterised in that each chamfer (35, 36) is machined in a plurality of steps, all left and all right hand chamfers (35, 36) being machined alternately with a change (23, 24) in the direction of rotation in each case and possible adjustment of the tool (12) relative to the workpiece (3).

8. A method according to one of Claims 1 to 7, characterised by its application when chamfering or bevelling the front edges of toothed wheels (3).

9. A device for shaping and bevelling or chamfering the tooth end faces of toothed cylindrical or tapered workpieces (3) according to the method according to Claim 1 or 8, characterised by the following structure :

a) the workpiece (3) can be driven rotationally on a workpiece spindle (6) supported in the machine frame, and is replaceably received ;

b) a tool (12, 50) having a tool edge (cutting edge 13) is attached to the free end of a swinging lever (10) which, by means of at least one cam disc (20) (control curve) seated on a rotationally drivable control shaft (16), executes swinging movements directed towards the workpiece tooth (15) to be machined and thereby swings about an axis (11) which extends at the other end of the swinging lever (10) parallel to a radius of the workpiece (3) extending from the workpiece axis and through the workpiece tooth (15) for machining ;

c) the rotational drive (60) of the workpiece spindle (6) and the rotational drive (61) of the camshaft (16) are adjusted in relation to one another so that the tool (12) during one revolution of the workpiece executes z strokes towards the workpiece (3) and back, and thereby shapes or bevels or chamfers one tooth half per stroke, where z is the number of teeth of the workpiece (3).

10. A device according to Claim 9, characterised in that a second swinging lever (10A) having a tool (12A) is present, and in that of the two swinging levers (10, 10A), in dependence on the direction of rotation (23, 24) of the workpiece spindle (6), one lever in each case is moved by a cam disc (20), whilst the other is halted in disengagement from the workpiece toothing.

11. A device according to Claim 9, characterised by an adjustable mechanism (46A, 46B, 47A, 47B, 48, 49) in the drive of the cam disc (20), with which the setting of the swinging lever (10) or of the workpiece (12) is adjustable by rotating the cam disc (20) relative to the workpiece (3).

12. A device according to Claim 9, characterised in that the swinging lever (10) can be moved from one side to the other in front of the workpiece face, and is drivable therefor.

13. A device according to Claim 9, characterised in that the swinging lever (10) is supported on its axis (11) by means of an adjustable eccentric (54, 55).

14. A device according to one of Claims 9 to 13, characterised in that the swinging lever (10) is pressed by spring tension (57) against the cam disc (20) which is arranged on the side of the swinging lever (10) facing towards the workpiece (3).

15. A device according to one of Claims 9 to 13, characterised in that the swinging lever (10) is guided between two synchronously rotating cam discs (20, 20A).

16. A device according to one of Claims 9 to 15, characterised in that the cam disc (20) has a tapered sleeve surface (56) and is slidable lengthwise, or in that the cam discs (20, 20A) have tapered sleeve surfaces (56) and are slidable lengthwise.

17. A device according to Claim 9, characterised in that the swinging axis (11) is angle-adjustable (angle β) with respect to the axis of the workpiece in a plane which is parallel to a plane determined by the workpiece axis and the said radius.

18. A device according to Claim 9, characterised in that the tool (12) has a second tool edge (cutting edge 52), offset with respect to the first tool edge (51), whereby the one cooperates with the left and the other with the right hand chamfer (35, 36).

19. A device according to Claim 9, characterised in that a shared motor (main drive 4) is provided for the rotational drive of the workpiece spindle (6) and that of the cam disc (20), and between the motor (4) and the workpiece spindle (6) and/or between the motor (4) and the cam disc (20) at least one transmission-adjustable gear step (5) is provided.

20. A device according to Claim 9, characterised in that for the rotational drive of the workpiece spindle (6) and for that of the cam disc (20) a respective individual motor (60, 61) is present, which motors are connected together and with a control device (62) via an electric shaft.

21. A device according to Claim 20, characterised in that the cam disc (20) executes a uniform rotational movement and the rotational movement of the workpiece spindle (6) is accelerated and retarded during each stroke of the tool (12).

**Revendications**

1. Procédé pour chanfreiner, par percussion, les extrémités frontales de dents de pièces d'œuvre dentées (3), cylindriques ou coniques, l'arête utile de l'outil (tranchant 13) étant déplacée d'un mouvement d'aller et retour en fonction de la vitesse périphérique de la pièce d'œuvre (3) tournant constamment autour de son axe, tandis que pour chaque course dirigée sur la surface frontale de la pièce d'œuvre, cette arête utile de l'outil agit par enlèvement de copeaux chaque fois sur une autre dent (15, 15A) de cette pièce d'œuvre, procédé caractérisé en ce que la course de déplacement aller et retour de l'arête de l'outil (tranchant 13) s'effectue sur un segment de cercle, dont l'axe (11) est, tout au moins approximativement, parallèle à un rayon de la pièce d'œuvre (3), partant de l'axe de cette pièce et passant par la dent (15, 15A) à usiner.

2. Procédé selon la revendication 1, caractérisé en ce que les chanfreins gauches et droits (35, 36) des dents, sont usinés dans des passes séparées et avec des outils distincts (12, 12A), le sens de rotation (23, 24) de la pièce d'œuvre (3) étant chaque fois inversé, et l'outil respectivement inactif (12A, 12) se trouvant hors de prise avec la denture de la pièce d'œuvre.

3. Procédé selon la revendication 1, caractérisé en ce que les chanfreins gauches et droits (35, 36) sont usinés dans des passes séparées avec le même outil (12), le sens de rotation (23, 24) de la pièce d'œuvre étant inversé, et l'outil étant éventuellement décalé par rapport à la pièce d'œuvre (3) entre les deux passes.

4. Procédé selon la revendication 1, caractérisé en ce que les chanfreins gauches et droits (35, 36) des dents sont usinés dans des passes séparées avec le même outil (12) et avec un sens de rotation (23, 24) inversé de la pièce d'œuvre (3), l'outil étant déplacé, lors du changement de sens de rotation de la pièce d'œuvre, en avant de la dent (15) respectivement placée en face, de la pièce d'œuvre (3) et, dans le cas d'un nombre de dents impair, la pièce d'œuvre (3) étant décalée en rotation d'un demi-pas.

5. Procédé selon la revendication 1, caractérisé en ce que les chanfreins gauches et droits (35, 36) des dents sont alternativement usinés en une passe unique avec le même outil (50) et en maintenant le sens de rotation (23), l'outil (50) usinant alternativement avec un premier tranchant (51), l'un (35) des chanfreins et, avec un second tranchant (52), l'autre chanfrein (36).

6. Procédé selon l'une des revendications 1 à 5, caractérisé en ce que les chanfreins gauches et droits (35, 36) sont obtenus pendant, repsectivement, une révolution de la pièce d'œuvre.

7. Procédé selon la revendication 3, caractérisé en ce que chaque chanfrein (35, 36) est usiné en plusieurs étapes, tous les chanfreins gauches et tous les chanfreins droits (35, 36) étant alternativement usinés avec, respectivement, un changement de sens de rotation (23, 24) et, éventuellement, un décalage de l'outil (12) par rapport à la pièce d'œuvre (3).

8. Procédé selon l'une des revendications 1 à 7, caractérisé en ce qu'il est mis en œuvre pour l'ébavurage ou le chanfreinage des arêtes frontales de roues dentées.

9. Dispositif pour chanfreiner ou ébavurer les extrémités frontales de dents de pièces d'œuvre dentées (3), cylindriques ou coniques, conformément au procédé selon la revendication 1 ou 8, dispositif caractérisé en ce que :

     a) la pièce d'œuvre (3) est saisie, de façon à pouvoir être entraînée en rotation et à pouvoir être échangée, sur une broche (6) de pièce d'œuvre montée sur le bâti de la machine,

     b) un outil (12, 50) comportant une arête (tranchant 13) est rapporté à l'extrémité libre d'un levier oscillant (10) qui, grâce à au moins un disque-came (20) (came de commande), monté sur un arbre de commande (16) susceptible d'être entraîné en rotation, effectue des mouvements oscillants dirigés vers la dent (15) de la pièce d'œuvre à usiner et pivote alors autour d'un axe (11), qui s'étend à l'autre extrémité du levier oscillant (10), parallèlement à un rayon de la pièce d'œuvre (3) partant de l'axe de cette pièce et passant par la dent à usiner (15) de la pièce d'œuvre,

     c) l'entraînement en rotation (60) de la broche (6) de la pièce d'œuvre et l'entraînement en rotation (61) de l'arbre de commande (16) sont accordés l'un à l'autre de façon que l'outil (12) effectue, pendant une révolution de la pièce d'œuvre, z courses aller et retour vers la pièce d'œuvre (3) et chanfreine ou bien ébavure alors à chaque course une moitié de dent, z étant le nombre de dents de la pièce d'œuvre (3).

10. Dispositif selon la revendication 9, caractérisé en ce qu'il est prévu un second levier oscillant (10A) comportant un second outil (12A), et que, de ces deux leviers oscillants (10, 10A) et en fonction du sens de rotation (23, 24) de la broche (6) de la pièce d'œuvre, l'un est respectivement mis en mouvement par un disque-came (20), tandis que l'autre est mis à l'arrêt, hors de prise avec la denture de la pièce d'œuvre.

11. Dispositif selon la revendication 9, caractérisé en ce qu'il comporte un mécanisme de réglage (46A, 46B, 47A, 47B, 48, 49) sur l'entraînement du disque-came (20), mécanisme grâce auquel la position du levier oscillant (10) ou bien de l'outil (12), est réglable par rapport à la pièce d'œuvre (3), par rotation du disque-came (20).

12. Dispositif selon la revendication 9, caractérisé en ce que le levier oscillant (10), en avant de la face frontale de la pièce d'œuvre, est susceptible d'être déplacé d'un côté à l'autre, et est susceptible d'être entraîné à cet effet.

13. Dispositif selon la revendication 9, caractérisé en ce que le levier oscillant (10) est monté sur son axe (11) au moyen d'un excentrique réglable (54, 55).

14. Dispositif selon l'une des revendications 9 à 13, caractérisé en ce que le levier oscillant (10) est appliqué, sous l'action d'un ressort (57), contre le disque-came (20), qui est disposé sur le côté du levier oscillant (10) faisant face à la pièce d'œuvre (3).

15. Dispositif selon l'une des revendications 9 à 13, caractérisé en ce que le levier oscillant (10) est guidé entre deux disques-cames (20, 20A) tournant en synchronisme.

16. Dispositif selon l'une des revendications 9 à 15, caractérisé en ce que le disque-came (20) comporte une surface-enveloppe conique (56) et est susceptible d'être déplacé longitudinalement, ou bien en ce que les disques-cames (20, 20A) comportent des surfaces-enveloppes coniques (56) et sont susceptibles d'être déplacés longitudinalement.

17. Dispositif selon la revendication 9, caractérisé en ce que l'axe de pivotement (11) est susceptible d'être réglé angulairement par rapport à l'axe de la pièce d'œuvre (angle β), dans un plan qui est parallèle à un plan défini par l'axe de la pièce d'œuvre et par le rayon précité.

18. Dispositif selon la revendication 9, caractérisé en ce que l'outil (12) comporte une seconde arête (tranchant 52), décalée par rapport à la première, l'une de ces arêtes opérant sur le chanfrein gauche (35) de la dent, tandis que l'autre arête opère sur le chanfrein droit (36) de la dent.

19. Dispositif selon la revendication 9, caractérisé en ce que, pour l'entraînement en rotation de la broche (6) de la pièce d'œuvre, et pour l'entraînement en rotation du disque-came (20), il est prévu un moteur commun (entraînement principal 4), auquel cas, entre le moteur (4) et la broche (6) de la pièce d'œuvre, et/ou entre le moteur (4) et le disque-came (20), il est prévu au moins un étage de transmission (5) dont la surmultiplication est susceptible d'être modifiée.

20. Dispositif selon la revendication 9, caractérisé en ce que, pour l'entraînement en rotation de la broche (6) de la pièce d'œuvre et pour l'entraînement en rotation du disque-came (20), il est respectivement prévu un moteur distinct (60, 61), ces moteurs étant reliés ensemble par l'intermédiaire d'un arbre électrique, et étant reliés à un dispositif de commande (62).

21. Dispositif selon la revendication 20, caractérisé en ce que le disque-came (20) effectue un déplacement en rotation uniforme, tandis que le déplacement en rotation de la broche (6) de la pièce d'œuvre est accéléré et décéléré pendant chaque course de l'outil (12).

Fig.1

Fig.15

Fig. 2

Fig. 3

Fig. 4

Fig. 5

Fig. 6

Fig. 7

Fig. 8

Fig. 9

Fig. 10

Fig. 11

Fig. 16

# Fig.12

# Fig.13

# Fig.14